# EUROPEAN PATENT APPLICATION

(11) **EP 1 626 590 A1**
(43) Date of publication of application: **15.02.2006**
(21) Application number: 05255039.9
(22) Date of filing: 15.08.2005
(51) Int. Cl.: H04Q 7/22

(54) **Telecommunications services apparatus and method for selectively routing mobile terminated short messages (MT-SMS) to a SMS router in the recipient's home network**

(30) Priority: 13.08.2004 GB 0418119; 03.09.2004 GB 0419575
(71) Applicant: TELSIS HOLDINGS LIMITED, Fareham, Hampshire PO15 5TT (GB)
(72) Inventor: Plimmer, James Michael, Southampton Hampshire, SO15 4LR (GB)
(74) Representative: Pilch, Adam John Michael

(57) **Abstract**

In a mobile telephone system (21), first data records associated with at least some subscribers of the network are stored on a first home location register (1), and second data records associated with one or more selected subscribers of the network are stored in a second HLR connected to a SMS router. The SMS router (3) is operable to process SEND_ROUTING_INFO_FOR_SM (SRI_SM) messages addressed to the home location register. The SEND_ROUTING_INFO_FOR_SM (SRI_SM) messages associated with the one or more selected subscribers that are addressed to the first home location register (1) are redirected to the second home location register (5), via the SMS router (3) according to a check in a Mobile Number Portability (MNP) database carried out by the first home location register (1).

## Description

This invention relates to telecommunications services apparatus and methods for use with a mobile telecommunications system, such as a mobile telephone system. In particular, the invention relates to improved architectures for message handling.

The invention is described in the context of GSM networks, but has applicability to other mobile network types. The term text messaging where used in this document is taken to mean any form of text messaging including but not limited to SMS, EMS, MMS and the like.

In traditional GSM networks, the Short Message Services (SMS) provide a facility for the transfer of a Short Message between an originating Mobile Station (MS) and a Short Message Service Centre (SMSC), and between the SMSC and a receiving MS. Messaging between a network Host or Application and an MS is also supported. The SMSC is a store and forward device, conceived to overcome the limitations of early GSM deployments where network coverage and MS battery life were not as good as they are today. In modem networks, the requirement for storage is very much reduced, with typically 80%+ of messages being directly deliverable on the first attempt. Indeed some new GSM networks are being deployed with no SMSCs at all.

The GSM Specifications (now under the ownership of the 3^{rd} Generation Partnership Project, 3GPP) define a messaging architecture where the Message Centre that provides message storage resides in the home network of the message sender. This means that the delivery process, including all aspects of retry schedules and validity period, are all under the sole control of the sending network. The recipient therefore has generally no means of controlling this, since messages may come from any network anywhere in the world. If the recipient is temporarily unavailable, then multiple messages may be stored in many different networks, waiting for a future opportunity to deliver. If the recipient were to decide that he would like all of these messages delivered for example by email, then the architecture does not permit this, because the messages are under the control of other networks.

International Patent Application No. WO 03/049461 describes how a signalling apparatus can be used to modify the Visitor Location Register address that is returned in the reply to a 'MAP Send Routing Information for Short Message' or a 'MAP Send Routing Information' query, thereby causing a subsequent message or voice call to be directed to a suitable apparatus for interception and processing of the transmission. This principle may be applied in conjunction with the present invention, which concerns in part a means by which a 'MAP Send Routing Information for Short Message' or a 'MAP Send Routing Information' query may be directed to the signalling apparatus, enabling a suitable modified response to be generated.

It is known in the art that Mobile Virtual Network Operators (MVNOs) may be set up. An MVNO operates as a distinct network from the customer's perspective, but in fact shares some physical infrastructure with a host network. The MVNO can set its own tariffs and manage its own subscribers. The MVNO normally has its own number ranges and operator code.

It is also known in the art that subscribers can, in many territories, move their subscription to an alternative operator in the region while retaining the same telephone number (Mobile Station ISDN number, or MSISDN.) This process requires the operators in the region to support 'Mobile Number Portability' (MNP), which is also a regulatory requirement in many territories. Such moved subscriptions are known as 'ported' subscriptions, and the subscriber is said to have ported their number to a different operator. Technical solutions for support of number portability are well-known, and result in certain signalling messages passing via both the original and the new operator. In the prior art, these solutions have only been applied to moving numbers to a different operator.

In the prior art it is difficult to provide services that operate on a subscriber's received messages. These mobile terminated (MT) messages in some circumstances do not even pass through the subscriber's home network; this is the case if the subscriber is roaming on another network, and a message is sent to him from any network other than his subscription network.

Although patent application WO 03/049461 describes how a signalling apparatus can be used in principle to overcome this difficulty, and to allow services to operate on all MT messages even when the recipient is roaming, application of this technique requires that 'MAP Send Routing Information for Short Message' or 'MAP Send Routing Information' queries be intercepted by an apparatus, for the purpose of modifying an address in the response. In practice, arranging for all such messages to be directed to an apparatus, without also directing a large number of other unwanted messages via the apparatus can be difficult in many networks, thereby rendering the technique less attractive.

The present invention addresses this problem, by providing an effective way to arrange, for example, that 'MAP Send Routing Information for Short Message' and 'MAP Send Routing Information' messages for a subset of a network's subscribers can be conveniently intercepted. This then allows the principles of WO 03/049461 to be efficiently applied to achieve access to all MT messages or calls for said subscribers.

According to a first aspect of the invention, there is provided telecommunications services apparatus in a mobile telecommunications network, the network including a home location register for storing data records associated with subscribers of the network, the apparatus comprising message processing means, wherein first data records associated with at least some subscribers of the network are stored on the home location register, and second data records associated with one or more selected subscribers of the network are also stored, and wherein said message processing means is operable to process certain messages addressed to the home location register.

According to another aspect of the invention, there is provided a telecommunications services method in a mobile telecommunications network, the network including a home location register for storing data records associated with subscribers of the network, wherein first data records associated with at least some subscribers of the network are stored on the home location register, and second data records associated with one or more selected subscribers of the network are also stored, and wherein certain messages addressed to the home location register are processed.

Other aspects of the invention include a computer program having computer executable instructions, which when loaded on to a computer is operable to cause the computer to perform the above method, and a computer program product comprising a computer readable medium having recorded thereon information signals representative of the computer program.

According to another aspect of the invention there is provided a telecommunications services apparatus in a mobile telecommunications network, the network including a first Home Location Register for storing data records associated with its subscribers, the apparatus comprising a message processing function and a second Home Location Register, wherein first data records associated with some or all subscribers of the mobile telecommunications network are stored on the first Home Location Register and second data records associated with one or more selected subscribers of the mobile telecommunications network are stored on the second Home Location Register, and wherein the said message processing function is operable to process certain messages addressed to the second Home Location Register.

According to a further aspect of the invention, messages associated with said one or more selected subscribers that are addressed to the first Home Location Register, are redirected to the second Home Location Register function.

According to a further aspect of the invention, said redirection is achieved using a known Mobile Number Portability technique, with the difference from the known art being that both first and second Home Location Registers here reside within the same mobile telecommunications network.

According to a further aspect of the invention, the said message processing function is operable to intercept certain messages addressed to the second Home Location Register, and to reply to these messages on behalf of the second Home Location Register.

According to a further aspect of the invention, the said message processing function is operable to intercept a 'Send Routing Information for Short Message' message addressed to the second Home Location Register, and to reply to this message on behalf of the second Home Location Register, the reply containing the address of the apparatus, such that a subsequent 'MAP Forward Short Message' message is caused to arrive at the apparatus, wherein the Message Processing Function can process the Short Message in order to provide a service to its intended recipient.

According to a further aspect of the invention, the service provided to the intended recipient of the short message may be one or a combination of a range of services including but not limited to:
■ Divert to another subscriber or to another medium such as email,
■ Archive to another medium such as email,
■ Copy to another subscriber or to another medium such as email,
■ Content Transformation,
■ Content insertion,
■ Delivery by an alternative medium,
■ Message logging,
■ Content filtering,
■ Message barring,
■ Content format conversion such as to suit a particular receiving device,
■ Message storage, etc.

According to a further aspect of the invention, the said message processing function is operable to intercept a 'Send Routing Information' message addressed to the second Home Location Register, and to reply to this message on behalf of the second Home Location Register, the reply containing the address of an apparatus, such that a subsequent mobile terminated voice call is caused to arrive at the apparatus, wherein the apparatus can provide a voice service to the intended recipient of the call.

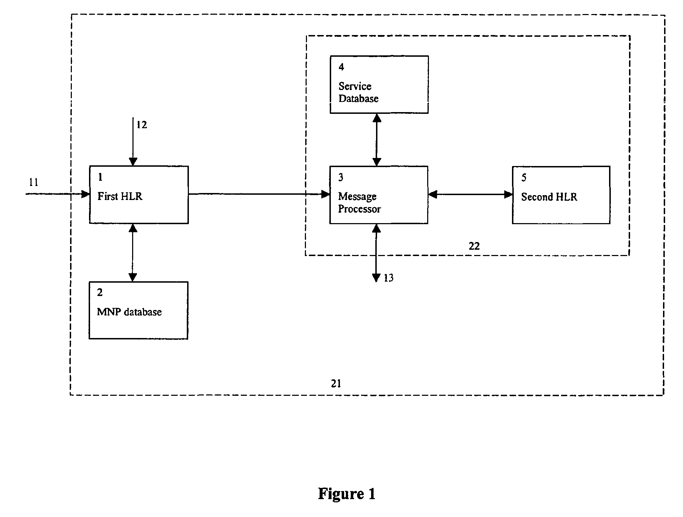

The invention will now be described by way of example with reference to the accompanying drawing (Figure 1) which shows telecommunications equipment according to an embodiment of the invention.

Referring to Figure 1, there is shown a network (21) containing services apparatus (22), and where messages addressed to the network's home location register HLR (1) from either off net (11) or on net (12) cause an MNP check using an MNP database (2). Selected numbers that have been 'ported' to the apparatus are routed via a message processor (3) which communicates with a dedicated HLR (5). A service database (4) may be used to store subscription data relating to services for the selected subscribers. Further signalling (13) either on or off net can take place from the message processor (3), which can for example comprise a Telsis (RTM) SMS Router, manufactured by Telsis Limited.

The present technique provides a straightforward means for a network to provide premium services to some of its subscribers. With traditional architectures this is difficult to achieve for MT traffic, as in some cases, the MT traffic does not even pass through the home network. By ensuring that MT traffic for the selected subscribers does always pass through the apparatus (22), a wide range of services can be implemented. An example of such a service that is difficult to achieve in a traditional network is SMS Divert. To implement this service it is necessary for 'MAP MT Forward Short Message' messages to be routed to an apparatus in the home network. A suitable apparatus is the Telsis SMS Router (RTM). Direction of such messages via the SMS Router may be most readily achieved by modifying the response to a 'MAP Send Routing Information For Short Message' (SRI-SM) query which is directed to the HLR associated with the terminating subscriber. However, to receive this query at an SMS Router in a traditional network would typically require that SRI-SM messages for all the network's subscribers are sent to the SMS Router, and furthermore it is likely that many other types of message that are addressed to the HLR by MSISDN would also be directed to the SMS Router. This may lead to undesirably high levels of traffic being forwarded to the HLR via an SMS Router. The present technique solves this problem by allowing the HLR signalling for only a subset of subscribers to be directed via an SMS Router. This conveniently allows for gradual service roll out without risk to other subscribers' traffic.

In a preferred embodiment, existing or known MNP mechanisms are used to select the subscribers for whom MT services are required. These selected customers are then 'ported out', but unlike a normal port, they remain customers of the same network. They are instead ported to a different HLR (5), referred to as the second HLR, on the same network. The second HLR (5) may be exactly the same type as the first HLR(s) (1) in the network, but it is connected behind an SMS Router, such as the message processor (3), so that all signalling into the second HLR (5) passes via the SMS Router. The SMS Router is able to either pass this traffic transparently to and from the second HLR (5), or to intercept it, and optionally reply on behalf of the second HLR (5). The apparatus is also operable to query the second HLR (5) so that the apparatus can forward messages or calls on to an appropriate destination after optional processing.

In some embodiments, such ported subscribers may retain their data record on the first HLR (1), may have only a 'residual' data record on the first HLR (1), or may have no data record on the first HLR (1).

A key advantage of this approach is that the techniques, management processes and equipment used are largely the same as are already in use. An additional HLR is used, but this can be identical to existing HLRs and provisioned in the same way. Customers who desire the premium services can be 'ported' to the new HLR using existing porting mechanisms. The ported-out database indicates that this customer has ported out, but addresses their messages not to another network but to an alternative HLR address in the same network.

Similar techniques can be used to provide premium voice call services for selected subscribers, by using the described technique to intercept 'Send Routing Information' messages, thereby directing voice calls via an apparatus that can provide said services, such as call recording.

In so far as the embodiment(s) of the invention described above may be implemented, at least in part, using software controlled processing apparatus, it will be appreciated that a computer program providing such software control and a storage medium by which such a computer program is stored are envisaged as aspects of the invention.

## Claims

1. Telecommunications services apparatus in a mobile telecommunications network, the network including a home location register for storing data records associated with subscribers of the network, the apparatus comprising message processing means, wherein first data records associated with at least some subscribers of the network are stored on the home location register, and second data records associated with one or more selected subscribers of the network are also stored, and wherein said message processing means is operable to process certain messages addressed to the home location register.

2. Apparatus according to claim 1, wherein messages associated with said one or more selected subscribers that are addressed to the home location register are redirected to the processing means.

3. Apparatus according to claim 1 or claim 2, wherein the apparatus comprises a second home location register for storing the second data records, and wherein messages associated with said one or more selected subscribers that are addressed to the first-mentioned home location register are redirected to the second home location register.

4. Apparatus according to claim 3, wherein the message processing means is operable to process the certain messages redirected to the second home location register.

5. Apparatus according to claim 2 or claim 4, wherein the message redirection is achieved using a mobile number portability technique.

6. Apparatus according to claim 3 or claim 4, wherein the first and second home location registers comprise first and second addresses for the same home location register, and only messages addressed to the second address are intercepted by the apparatus.

7. Apparatus according to any one of claims 1 to 6, wherein the message processing means is operable to intercept certain messages redirected to the home location register, and to reply to these messages on behalf of the home location register.

8. Apparatus according to any one of claims 1 to 7, wherein the message processing means is operable to intercept a "Send Routing Information for Short Message" message redirected to the home location register and to reply to the message on behalf of the home location register, the reply containing the address of the apparatus such that a subsequent "MAP Forward Short Message" message is caused to arrive at the apparatus, wherein the message processing means can process the received message in order to provide a service to the intended recipient.

9. Apparatus according to claim 8, wherein the service provided to the intended recipient is one or more of : divert to another subscriber; divert to another medium; archive to another medium; copy to another subscriber; copy to another medium; content transformation; content insertion; delivery by another medium; message logging; content filtering; message barring; content format conversion; message storage.

10. Apparatus according to claim 9, wherein the other medium is email.

11. Apparatus according to any one of claims 1 to 10, wherein the message processing means is operable to intercept a "Send Routing Information" message addressed to the first-mentioned or second home location register, and to reply to the message on behalf of the home location register, the reply containing the address of the apparatus, wherein the apparatus can provide a voice service to the intended recipient.

12. A telecommunications services method in a mobile telecommunications network, the network including a home location register for storing data records associated with subscribers of the network, wherein first data records associated with at least some subscribers of the network are stored on the home location register, and second data records associated with one or more selected subscribers of the network are also stored, and wherein certain messages addressed to the home location register are processed.

13. A method according to claim 12, wherein messages associated with said one or more selected subscribers that are addressed to the home location register are redirected for processing.

14. A method according to claim 12 or claim 13, wherein a second home location register is provided for storing the second data records, and wherein messages associated with said one or more selected subscribers that are addressed to the first-mentioned home location register are redirected to the second home location register.

15. A method according to claim 14, wherein the certain messages redirected to the second home location register are processed.

16. A method according to claim 13 or claim 15, wherein the message redirection is achieved using a mobile number portability technique.

17. A method according to claim 14 or claim 15, wherein the first and second home location registers comprise first and second addresses for the same home location register, and only messages addressed to the second address are intercepted.

18. A method according to any one of claims 12 to 17, wherein certain messages redirected to the home location register are intercepted, and the apparatus replies to these messages on behalf of the home location register.

19. A method according to any one of claims 12 to 18, wherein a "Send Routing Information for Short Message" message redirected to the home location register is intercepted and a reply to the message is sent on behalf of the home location register, the reply containing the address of apparatus such that a subsequent "MAP Forward Short Message" message is caused to arrive at the apparatus, wherein the received message can be processed in order to provide a service to the intended recipient.

20. A method according to claim 19, wherein the service provided to the intended recipient is one or more of : divert to another subscriber; divert to another medium; archive to another medium; copy to another subscriber; copy to another medium; content transformation; content insertion; delivery by another medium; message logging; content filtering; message barring; content format conversion; message storage.

21. A method according to claim 20, wherein the other medium is email.

22. A method according to any one of claims 12 to 21, wherein a "Send Routing Information" message addressed to the first-mentioned or second home location register is intercepted, and a reply to the message is sent on behalf of the home location register, the reply containing the address of apparatus, wherein the apparatus can provide a voice service to the intended recipient.

23. A computer program having computer executable instructions, which when loaded on to a computer is operable to cause the computer to perform the method according to any one of claims 12 to 22.

24. A computer program product having a computer readable medium having recorded thereon information signals representative of the computer program according to claim 23.
